(19) Europäisches Patentamt
European Patent Office
Office européen des brevets

(11) **EP 2 518 093 B1**

(12) **EUROPEAN PATENT SPECIFICATION**

(45) Date of publication and mention
of the grant of the patent:
**15.10.2014 Bulletin 2014/42**

(51) Int Cl.:
***C08F 265/06*** (2006.01)   ***C08F 220/10*** (2006.01)
***C08F 285/00*** (2006.01)   ***C08J 5/18*** (2006.01)

(21) Application number: **10839608.6**

(22) Date of filing: **27.12.2010**

(86) International application number:
**PCT/JP2010/073595**

(87) International publication number:
**WO 2011/078380 (30.06.2011 Gazette 2011/26)**

(54) **ACRYLIC RESIN COMPOSITION AND MOLDED ARTICLE OF ACRYLIC RESIN**

ACRYLHARZZUSAMMENSETZUNG UND FORMARTIKEL AUS ACRYLHARZ

COMPOSITION DE RÉSINE ACRYLIQUE ET ARTICLE MOULÉ DE RÉSINE ACRYLIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.12.2009 JP 2009295515**

(43) Date of publication of application:
**31.10.2012 Bulletin 2012/44**

(73) Proprietor: **Mitsubishi Rayon Co., Ltd.
Tokyo 100-8253 (JP)**

(72) Inventors:
• **YAMAGUCHI, Yuko**
**Otake-shi**
**Hiroshima 739-0693 (JP)**
• **ABE, Junichi**
**Otake-shi**
**Hiroshima 739-0693 (JP)**
• **SUEMURA, Kenji**
**Toyohashi-shi**
**Aichi 440-8601 (JP)**

(74) Representative: **Ter Meer Steinmeister & Partner
Patentanwälte
Mauerkircherstrasse 45
81679 München (DE)**

(56) References cited:
**JP-A- 10 101 748     JP-A- 2003 128 735
JP-A- 2004 002 665     JP-A- 2006 249 198**

**Description**

TECHNICAL FIELD

The present invention relates to an acrylic resin composition which can be molded into a molded body having an excellent moldability, a suppressed whitening property, and a high mechanical strength, and to a molded body thereof.

BACKGROUND ART

Traditionally, a thermoplastic resin has been produced, for example, by producing a latex containing a polymer such as a polybutadiene, a styrene-butadiene copolymer, a styrene-butadiene-acrylonitrile copolymer, or an acrylate ester containing acrylic rubber by emulsion polymerization method, and carrying out salting out, acid deposition coagulation, spray drying, freeze drying or the like to separate or collect a powder polymer. A compounding agent is added to the powder thermoplastic resin, and the resultant is melted by a single screw extruder, a twin screw extruder, or the like and is extruded in a strand shape. The strand is cut by cold cut method, hot cut method, or the like to form a pellet. Then, the pellet is molded into a desired shape to produce a molded body. A molded body is widely used in various fields such as automotive field, electrical and electronic field, and OA equipment such as printer. In particular, since a molded body of an acrylic resin has an excellent transparency as well as a beautiful appearance and weathering resistance, it is widely used for an electrical equipment component, a vehicle component, an optical component, an ornament, a signboard, or the like. Among these, since an acrylic resin film molded body (hereinafter, described as "acrylic resin film") has properties including an excellent transparency, weathering resistance, flexibility and workability, when it is laminated on a surface of various resin molded articles, wooden articles or metal articles, it makes a contribution to the improvement of appearance.

As a raw material for this kind of acrylic resin film, various resin compositions has been proposed and put to practical use. Among these, as a raw material for an acrylic resin film having an excellent weathering resistance and transparency as well as excellent stress whitening resistance such as bending whitening resistance, a polymer having a specific configuration which is obtained by a multistep polymerization of an alkyl acrylate, an alkyl methacrylate and a graft crossing agent is known (patent documents 1 and 2). Since this acrylic resin film formed by using this multistep polymer as a raw material has a particularly excellent performance, it is suitably used for an epidermis material, a marking film, a high intensity reflector coating film, or the like of a building material such as vehicle interior, furniture, door material, window frame, baseboard and bathroom interior.

Also, a multistep polymer which is available for an optical film having a high level printing compatibility in which there is a little printing loss derived from a fish eye and it is possible to adapt to various printing patterns, and a method for producing it are proposed (patent document 3). Further, a method for producing a emulsified polymerization latex, of which melt extrusion is easy, whose productivity is excellent and in which a resin molded body having a good appearance can be formed, and a method for producing a powder and a resin molded body are proposed (patent document 4).

However, in the case in which an acrylic resin film is produced using the resin composition or the method for producing it which is proposed in patent documents 1 to 4, since it has a low flowability and a high melting viscosity, the pressure of melt extrusion comes to be high and the discharge amount of the resin comes to be low. Thus, there is a problem such that the production rate is low, that the resin stays in a molding machine and is deteriorated, and that melt extrusion for film molding or the like can not be carried out over a long period of time.

Thus, in order to increase the flowability of a polymer composition and to decrease the melting viscosity, a method of decreasing a molecular weight of a branched polymer and a method of mixing a branched polymer and a linear polymer are also reported (patent document 5).

However, a polymer composition containing a branched polymer with a simply decreased molecular weight has a low mechanical strength, and fracture occurs at the molding time particularly in the case of forming a film. Also, when a film of a resin molded body is laminated directly on a surface of steric resin molded articles, wooden articles or metal articles, or when this film of a resin molded body is laminated on a surface of various three-dimensional resin molded articles, wooden articles or metal articles after lamination on various flat resin sheets, not only fracture and crack may occur, but also whitening may occur and damage the design character.

Also, an acrylic resin molded body produced by mixing a branched polymer and a linear polymer has a bending strength which is equal to or higher than a bending strength of an acrylic resin molded body produced by only a branched polymer. However, this does not apply to a case in which the acrylic resin molded body is a film, and the mechanical strength may be deteriorated and fracture may occur at the molding time of the film. Also, when the acrylic resin film is laminated on a surface of various three-dimensional resin molded articles, wooden articles or metal articles, directly or after lamination on various flat resin sheets, not only fracture and crack may occur, but also whitening may occur and damage the design character.

PRIOR ART DOCUMENT

PATENT DOCUMENT

Patent document 1: JP 62-19309 A
Patent document 2: JP 63-8983 B
Patent document 3: JP 2003-128735 A
Patent document 4: JP 2006-249198 A
Patent document 5: JP 9-157477 A

SUMMARY OF THE INVENTION

PROBLEM TO BE SOLVED BY THE INVENTION

The problem of the present invention is to provide an acrylic resin composition which has a high flowability and low melt viscosity and in which continuous fast molding can be carried out over a long period of time without staying in a molding machine, and by which a molded body having a suppressed whitening property without deterioration of the original properties such as appearance and mechanical strength can be obtained; and to provide a molded body thereof. In particular, it is to provide an acrylic resin composition which is suitable for a film molded body whose workability is good without fracture and crack and whose design character is also good without whitening when it is laminated on a surface of various three-dimensional resin molded articles, wooden articles or metal articles, directly or after lamination on various flat resin sheets; and to provide a molded body thereof.

MEANS OF SOLVING THE PROBLEMS

The present invention is an acrylic resin composition obtained by polymerizing a monomer comprising an alkyl methacrylate having an alkyl group with a carbon number of 1 to 4 in a presence of an elastomeric polymer, in which the elastomeric polymer is obtained by polymerizing any one kind or two or more kinds selected from alkyl acrylates having an alkyl group with a carbon number of 1 to 8 and alkyl methacrylates having an alkyl group with a carbon number of 1 to 4 with a graft crossing agent; wherein the composition satisfies the following requirements (1) and (2).

(1) A melt flow index is 5 g /10 min. or more, which is measured under conditions of a temperature of 230°C and a load of 5 kg according to ASTM D-1238.
(2) A difference of W values before and after tensile test of a specimen is 4 or less, which is measured using a C/2° light source according to geometric condition a of JIS Z 8722 (Methods of color measurement - Reflecting and transmitting objects). The specimen is a film with a thickness of 75 μm and a width of 20 mm, which is obtained by molding the acrylic resin composition. The tensile test is carried out under conditions of an initial inter-chuck distance of 25 mm, a temperature of 23°C, a tensile rate of 500 mm/min. and an end-point inter-chuck distance of 45 mm. Also, the present invention is a acrylic resin composition, wherein the composition further satisfies the following requirements (3) and (4).
(3) A weight average molecular weight of an acetone soluble portion in the acrylic resin composition is 30000 or more and 50000 or less, which is measured by gel permeation chromatography (GPC).
(4) A value of a gel content is 53 % or more and 63 % or less, which is calculated by the following equation:

$$G = (m \, / \, M) \times 100$$

wherein, in the equation, G (%) represents a gel content and M represents a mass of a predetermined amount of the acrylic resin composition, and m is a mass of the acetone soluble portion in the predetermined amount of the acrylic resin composition.

Also, the present invention is an acrylic resin molded body obtained by using the above-mentioned acrylic resin composition.

EFFECT OF THE INVENTION

The acrylic resin composition of the present invention has a high flowability and low melt viscosity and continuous fast molding can be carried out over a long period of time with rarely staying in a molding machine, and has an excellent workability. Also, by using the acrylic resin composition of the present invention, a molded body having a suppressed whitening property without deterioration of the original properties such as appearance and mechanical strength can be obtained. In particular, when the acrylic resin molded body of the present invention which is formed in a film state is laminated directly on a surface of various three-dimensional resin molded articles, wooden articles or metal articles, or is laminated on a surface of various three-dimensional resin molded articles, wooden articles or metal articles after lamination on various flat resin sheets, fracture and crack do not occur and whitening does not also occur, and the design character is excellent.

MODE FOR CARRYING OUT THE INVENTION

The present invention is an acrylic resin composition obtained by polymerizing a monomer, which comprises an alkyl methacrylate having an alkyl group with a carbon number of 1 to 4, in a presence of an elastomeric polymer obtained by polymerizing any one kind selected from alkyl acrylates having an alkyl group with a carbon number of 1 to 8 and alkyl methacrylates having an alkyl group with a carbon number of 1 to 4 with a graft crossing agent.

The alkyl acrylate (hereinafter, also referred to as alkyl acrylate (A1)) having an alkyl group with a carbon number of 1 to 8 as a monomer which composes an elastomeric polymer (hereinafter, also referred to as elastomeric polymer (A)) used in the present invention may be linear or branched. Examples thereof include methyl acrylate, ethyl acrylate, propyl acrylate, butyl acrylate, 2-ethylhexyl acrylate and n-octyl acrylate. This may be used alone, or in combination with two or more kinds. Among these, the compound whose glass transition temperature (hereinafter, described as "Tg") is low is preferable, and n-butyl acrylate is preferable. If the glass transition temperature is low, the acrylic resin composition has a preferred impact resistance and can also easily be molded.

The alkyl methacrylate (hereinafter, also referred to as alkyl methacrylate (A2)) having an alkyl group with a carbon number of 1 to 4 as a monomer which composes elastomeric polymer (A) may be linear or branched. Examples thereof include methyl methacrylate, ethyl methacrylate, propyl methacrylate and butyl methacrylate. This may be used alone, or in combination with two or more kinds.

As a monomer to obtain the elastomeric polymer, any one of alkyl acrylate (A1) and alkyl methacrylate (A2) may be used and the combination of both be used, but it is desirable that the content of alkyl acrylate (A1) is 50 mass% or more.

As a monomer which composes elastomeric polymer (A), monomer (A3) having a double bond and multifunctional monomer (A4) can be used in addition to alkyl acrylate (A1) and/or alkyl methacrylate (A2).

Examples of monomer (A3) having a double bond except for alkyl acrylate (A1) and alkyl methacrylate (A2) include, for example, acrylate monomers such as higher alkyl acrylates having an alkyl group with a carbon number of 9 or more, lower alkoxy acrylates and cyanoethyl acrylate, acrylamide, acrylic acid, methacrylic acid, styrene, alkyl substituted styrene, acrylonitrile and methacrylonitrile.

Also, multifunctional monomer (A4) is not limited to a monomer which gives rubber elasticity to a molded body obtained, and can arbitrarily be used depending on the intended use of the molded body, for example, in the case in which heat resistance or the like is severely required. Examples of multifunctional monomer (A4) include, for example, alkylene glycol dimethacrylate such as ethylene glycol dimethacrylate, 1,3-butylene glycol dimethacrylate, 1,4-butylene glycol dimethacrylate and propylene glycol dimethacrylate. Also, polyvinyl benzenes such as divinylbenzene and trivinylbenzene and the like can be used.

As for the ratio of these monomers used which compose an elastomeric polymer, it is preferable that the total monomer amount of alkyl acrylate (A1) and alkyl methacrylate (A2) is 80 to 100 mass% with respect to the total monomer amount of (A1) to (A4), the amount of monomer (A3) is 0 to 20 mass%, and the amount of multifunctional monomer (A4) is 0.01 to 10 mass%.

The glass transition temperature (Tg) of the polymer formed by above-mentioned monomers (A1) to (A4) is preferably 0°C or lower, and further preferably -30°C or lower. If the Tg of the polymer formed by above-mentioned monomers (A1) to (A4) is 0°C or lower, the molded body obtained has an impact resistance. The Tg can be calculated by the FOX equation using values which are described in a polymer handbook (Polymer HandBook (J. Brandrup, Interscience, 1989)).

The graft crossing agent which composes elastomeric polymer (A) gives rubber elasticity to the polymer by forming a crosslink with alkyl acrylate (A1) and/or alkyl methacrylate (A2), and forms a crosslink with a rigid polymer described below. Examples of the graft crossing agent include allyl, methallyl or crotyl esters of copolymerizable $\alpha$, $\beta$-unsaturated carboxylic acids or dicarboxylic acids. In particular, allyl ester of acrylic acid, methacrylic acid, maleic acid or fumaric acid is preferable. Among these, allyl methacrylate particularly has an excellent advantageous effect. In addition, triallyl cyanurate, triallyl isocyanurate, and the like are also effective. In the graft crossing agent, the conjugated unsaturated bonding portion of the ester mainly has a reactivity which is much higher than that of the ester bonding portion of allyl group, methallyl group or crotyl group to form a chemical bond. The amount of the graft crossing agent used is preferably 0.1 to 5 parts by mass with respect to 100 parts by mass of the total amount of monomers (A1) to (A4) which compose elastomeric polymer (A), and is more preferably 0.3 to 2 parts by mass.

Elastomeric polymer (A) may be polymerized in two or more steps. In this case, a monomer mixture having a different composition may be polymerized. When the polymerization is carried out in two or more steps, it comes to be easy to control the particle diameter of the acrylic resin composition finally obtained.

Elastomeric polymer (A) which is composed of the above-mentioned monomer can be obtained by emulsion polymerization, suspension polymerization, or the like. In the case of emulsion polymerization, it is preferable to use an emulsifier, a radical polymerization initiator, a chain transfer agent, and the like. As the emulsifier, an anionic, cationic, or nonionic surfactant can be used, and an anionic surfactant is particularly preferable. As the anionic surfactant, carboxylate salts such as rosin acid soaps, potassium oleate, sodium stearate, sodium myristate, sodium N-lauroyl sarcosinate and dipotassium alkenyl succinates; sulfate ester salts such as sodium lauryl sulfate; sulfonate salts such as sodium dioctyl sulfosuccinate, sodium dodecylbenzene sulfonate and sodium alkyl diphenyl ether disulphonates; phosphate ester salts such as sodium polyoxyethylene alkyl phenyl ether phosphates can be used. Also, examples of the method for producing an emulsified liquid include methods in which a monomer mixture is supplied to water and a surfactant is thereafter loaded, methods in which a surfactant is supplied to water and a monomer mixture is thereafter loaded, and methods in which a surfactant is supplied to a monomer mixture and water is thereafter loaded. Among these, methods in which a monomer mixture is supplied to water and a surfactant is thereafter loaded, and methods in which a surfactant is supplied to water and a monomer mixture is thereafter loaded are particularly preferable.

As the radical polymerization initiator, peroxides, azo initiators and redox initiators by combination of an oxidizer and a reductant can be used. Among these, redox initiators are preferable. In particular, sulphoxylate initiators by combination of ferrous sulfate, disodium ethylenediamine tetraacetate, sodium formaldehyde sulphoxylate and hydroperoxide are preferable. Also, as a method for adding it, methods for adding it to any one or both of water phase and monomer phase can be used.

As the chain transfer agent, alkyl mercaptans having a carbon number of 2 to 20, mercapto acids, thiophenol and carbon tetrachloride can be used.

The polymerization temperature is different by the kind and the quantity of the polymerization initiator used, but is preferably 40 to 120°C, and more preferably 60 to 95°C.

The alkyl methacrylate (hereinafter, also referred to as monomer (B1)) having an alkyl group with a carbon number of 1 to 4 which is contained in a monomer (also referred to as monomer (b)) which is polymerized in a presence of above-mentioned elastomeric polymer (A) may be linear or branched. Examples of alkyl methacrylate (B1) include the same as those of alkyl methacrylate (A2) which is a monomer composing elastomeric polymer (A). This can be used alone, or in combination with two or more kinds.

Further, as monomer (b), monomer (B2) having a double bond except for (B1) can be used in addition to alkyl methacrylate (B1). Examples of this monomer having a double bond include the same as those of monomer (A1) or (A3) in the elastomeric polymer.

The Tg of rigid polymer (B) which can be obtained by polymerizing only monomer (b) is preferably 60°C or higher, and more preferably 80°C or higher. If the polymer has the above-mentioned Tg, an acrylic resin composition having an excellent moldability and a molded body having a mechanical strength can be obtained. Rigid polymer (B) may be polymerized in two or more steps. In this case, a monomer mixture having a different composition may be polymerized.

The amount of elastomeric polymer (A) used in the above-mentioned acrylic resin composition is preferably 20 to 60 mass%. If the amount of elastomeric polymer (A) used is 20 mass% or more, the molded body obtained has an improved mechanical strength and crack can be suppressed. In particular, in the case of a film molded body, fracture can be suppressed. Even in the case in which it is laminated on a surface of various three-dimensional resin molded articles, wooden articles or metal articles, directly or after lamination on various resin sheets, fracture and crack do not occur and whitening does not also occur, and the molded body having an excellent design character can be formed. Also, if the amount of elastomeric polymer (A) used is 60 mass% or less, deterioration of the flowability can be suppressed and increasing of the melt viscosity can be suppressed, and staying of the resin in a molding machine can be suppressed. Also, continuous fast molding can be carried out over a long period of time. The amount of alkyl methacrylate (B1) used and monomer (B2) except for (B1) which are polymerized in a presence of above-mentioned elastomeric polymer (A) is preferably 40 to 80 mass% in 100 mass% of the acrylic resin composition.

As for the polymerization reaction of monomer (b) which is carried out in a presence of elastomeric polymer (A), monomer (b) is preferably added directly using the polymerization liquid obtained after finishing the polymerization of elastomeric polymer (A), to continuously carry out the polymerization. Also, examples of the emulsifier, the radical polymerization initiator, and the chain transfer agent include the same as those used in the polymerization of elastomeric polymer (A). Also, the amount of the chain transfer agent is preferably 0.5 to 0.8 part by mass with respect to 100 parts by mass of monomer (b), and more preferably 0.7 to 0.8 part by mass. If the polymerization liquid of elastomeric polymer (A) is used, there may not be necessary to newly add these.

Before polymerizing monomer (b) which is polymerized after finishing the polymerization of elastomeric polymer (A), there is preferably included a step of sequentially polymerizing a monomer, in which the content of an alkyl acrylate having an alkyl group with a carbon number of 1 to 8 is gradually decreased and the content of an alkyl methacrylate having an alkyl group with a carbon number of 1 to 4 is gradually increased from the monomer composition which composes elastomeric polymer (A), to obtain a polymer (also referred to as intermediate polymer (C)). When intermediate polymer (C) is included, the acrylic resin composition has an improved transparency, and in the case of molding the acrylic resin composition to a film, stress whitening of the film can be suppressed and the design character can be improved. The component of intermediate polymer (C) is preferably alkyl acrylate (C1) having an alkyl group with a carbon number of 1 to 8, alkyl methacrylate (C2) having an alkyl group with a carbon number of 1 to 4, another monomer (C3) having a copolymerizable double bond which is optionally used, multifunctional monomer (C4) which is optionally used, and a graft crossing agent. Examples of components (C1) to (C4) and the graft crossing agent respectively include the same as those of components (A1) to (A4) and the graft crossing agent of elastomeric polymer (A). As for the preferred amount of each components used in the case in which the total amount of components (C1) to (C4) is 100 mass%, component (C1) is preferably 10 to 90 mass%, component (C2) is preferably 10 to 90 mass%, component (C3) is preferably 0 to 20 mass%, and component (C4) is preferably 0 to 10 mass%. The amount of the graft crossing agent used is preferably 0.1 to 2 parts by mass with respect to 100 parts by mass of the total amount of components (C1) to (C4).

The ratio of intermediate polymer (C) in the acrylic resin composition is preferably 0 to 35 mass%, and more preferably 5 to 20 mass%. If intermediate polymer (C) is included in the acrylic resin composition, the ratio of elastomeric polymer (A) / intermediate polymer (C) / rigid polymer (B) is preferably 25 to 40 mass% / 5 to 20 mass% / 40 to 70 mass%.

In the case of using emulsion polymerization method, an acrylic resin composition is collected in a powder state from the latex after finishing of the polymerization reaction. Specifically, a method is used as a method for collecting an acrylic resin composition in a powder state, in which the method includes: contacting the latex with a metal salt aqueous solution for coagulation or salting out, separating the solid and liquid, thereafter washing this with water of approximately 1 to 100 mass times of the polymer, carrying out dehydration such as filter separation to obtain a moist powder, and further drying this moist powder by a compression dehydration machine or a hot air drying machine such as a fluidized drying machine. In addition, the latex may directly be dried by the spray dry method. The drying temperature and drying time can be determined depending on the kind of the polymer.

Examples of the coagulating agent used for coagulation of the acrylic resin composition include organic salts such as sodium acetate, calcium acetate, potassium formate and calcium formate; and inorganic salts such as sodium chloride, potassium chloride, calcium chloride, magnesium chloride and sodium sulfate. Among them, calcium salts such as calcium acetate and calcium chloride are preferable. In particular, in terms of whitening resistance under warm water of the resin molded body formed by the powder and also in terms of decreased water content of the powder collected, calcium acetate is preferable. The coagulating agent can be used alone, or in combination with two or more kinds. The coagulating agent is usually used in the solution form, and the aqueous solution of the coagulating agent, preferably calcium acetate, preferably has a concentration of 0.1 mass% or more, particularly 1 mass% or more because the acrylic resin composition is stably coagulated and collected. Also, the aqueous solution of the coagulating agent, preferably calcium acetate, preferably has a concentration of 20 mass% or less, particularly 15 mass% or less because the acrylic resin composition collected has a small amount of the remaining coagulating agent and particularly because there is a little deterioration of the performance of the resin molded body such as whitening resistance under warm water and coloration. Also, when the concentration of calcium acetate is over 20 mass %, calcium acetate may be precipitated by saturation at 10°C or lower.

Examples of the methods for contacting a latex with a coagulating agent include, for example, a method in which a latex is continuously added to an aqueous solution of a coagulating agent with stirring it and the stirring is continued for a predetermined period of time, and a method in which an aqueous solution of a coagulating agent and a latex in a predetermined ratio are contacted with continuously injecting them to a container having a stirrer and the mixture of the coagulated acrylic resin composition and water are continuously extracted from the container. The amount of the aqueous solution of a coagulating agent is preferably 10 parts by mass or more with respect to 100 parts by mass of the acrylic resin composition latex, and is preferably 500 parts by mass or less. The temperature in the coagulation step is preferably 30°C or higher, and is also preferably 100°C or lower.

The weight average molecular weight of the acetone soluble portion in the acrylic resin composition is preferably 30000 to 50000, and more preferably 35000 to 45000. If the weight average molecular weight is 30000 or more, the molded body, whose handling is easy and which has a high mechanical strength and in which the generation of crack, can be obtained. In the case in which the molded body is a film, when it is laminated on a surface of various three-dimensional resin molded articles, wooden articles or metal articles, directly or after lamination on a resin sheet, fracture and crack as well as whitening are suppressed and the occurrence of bad appearance is suppressed. Also, if the weight average molecular weight is 50000 or less, the flowability of the acrylic resin composition is kept high and the melting viscosity is kept low, and there is a small amount of staying compound in a molding machine. Also, the pressure at the time of melt extrusion is low and continuous fast molding can be carried out over a long period of time.

Here, the weight average molecular weight is a measured value which is measured using the acetone soluble portion in the acrylic resin composition by gel permeation chromatography (GPC). Specifically, the measured value by the following method can be adopted.

(1) 1 g of the acrylic resin composition is dissolved in 50 g of acetone, and it is refluxed at 70°C for 6 hours to extract an acetone soluble portion.
(2) The extract obtained is centrifuged using CRG SERIES (made by Hitachi, Ltd.) at 4°C under 14000 rpm for 30 minutes.
(3) The acetone insoluble portion is removed by decantation, and GPC measurement is carried out using the acetone soluble portion obtained by drying in a vacuum dryer at 50°C for 24 hours and the mass weight average molecular weight is calculated by a calibration curve using standard polystyrenes.

Equipment: "HLC8220" made by TOSOH CORPORATION
Column: "TSKgel SuperMultiporeHZ-H" (4.6 mm internal diameter $\times$ 15 cm length $\times$ 2 pieces, exclusion limit: $4 \times 10^7$ (estimated)) made by TOSOH CORPORATION
Eluent: tetrahydrofuran
Flow rate of eluent: 0.35 mL/minute
Measurement temperature: 40°C
Injection amount of sample: 10 $\mu$l (sample concentration: 0.1 %)

The weight average molecular weight of the acetone soluble portion of the acrylic resin composition can be controlled by appropriately adjusting the amount of the chain transfer agent at the time of the polymerization. The chain transfer agent is preferably mixed at the time of the polymerization of rigid polymer (B).

The gel content of the above-mentioned acrylic resin composition is preferably 53 mass% or more and 63 mass% or less. It is more preferably 55 mass% or more and 61 mass% or less. If the gel content is 53 mass% or more, the molded body obtained has a high mechanical strength, and the handling is easy. Also, if the gel content is 53 mass% or more, in the case in which the molded body is a film, it is easy to be laminated on a surface of various resin molded bodies or the like, and the whitening is suppressed and it has an excellent design character. Also, if the gel content is 63 mass% or less, the flowability at the time of molding is high and the continuous molding is enabled.

Here, the gel content of the acrylic resin composition is calculated by the following equation:

$$G = (m / M) \times 100$$

wherein, in the equation, G (%) represents a gel content and M represents a predetermined amount of the acrylic resin composition (also referred to as mass before extraction), and m is a mass of the acetone soluble portion in the predetermined amount of the acrylic resin composition (also referred to as mass after extraction).

Specifically, an acetone solution obtained by dissolving 1 g as mass M before extraction of the acrylic resin composition in 50 g of acetone is refluxed at 70°C for 6 hours. The extraction liquid obtained is centrifuged using CRG SERIES (made by Hitachi, Ltd.) at 4°C under 14000 rpm for 30 minutes. The solution is removed by decantation to obtain a remaining solid. The reflux, centrifugation and decantation of this solid are repeated again, and the solid obtained is dried at 50°C for 24 hours. The mass of the acetone insoluble portion obtained is measured as mass m after extraction. From mass M before extraction and mass m after extraction, gel content G (%) is calculated by the above-mentioned equation.

The acrylic resin composition preferably has a weight average molecular weight of 30000 or more and 50000 or less, and has a gel content of 53 % or more and 63 % or less. Even if the weight average molecular weight of the acetone soluble portion is 50000 or more, if the gel content is 40 mass% or less, the flowability is kept high and the melting viscosity is kept low, and there is a small amount of staying compound in a molding machine. Also, the pressure at the time of melt extrusion is low and continuous fast molding can be carried out over a long period of time. However, the molded body obtained has a low mechanical strength. In particular, in the case in which the molded body is a film, the handling is difficult and fracture and crack frequently occur when it is laminated on a surface of various three-dimensional resin molded articles, wooden articles or metal articles, directly or after lamination on a resin sheet.

The acrylic resin composition has a melt flow index (MFI) of 5 g / 10 min. or more, which is measured under conditions of a temperature of 230°C and a load of 5 kg according to ASTM D-1238. If the melt flow index is 5 g /10 min. or more, since the flowability is high at the time of molding and the melting viscosity is low, continuous fast molding can be carried out over a long period of time. MFI is more preferably 6 g /10 min. or more, and is further preferably 7 g / 10 mni. or more.

Also, the above-mentioned acrylic resin composition has a difference of W values before and after tensile test of a specimen being 4 or less, which is measured using a C/2° light source according to geometric condition a of JIS Z 8722 (Methods of color measurement - Reflecting and transmitting objects). The specimen is a film with a thickness of 75 $\mu$m and a width of 20 mm, which is obtained by molding the acrylic resin composition. The tensile test is carried out under conditions of an initial inter-chuck distance of 25 mm, a temperature of 23°C, a tensile rate of 500 mm/min. and an end-point inter-chuck distance of 45 mm. If the difference of W values before and after tensile test is 4 or less, when the film formed using this acrylic resin composition is laminated on a surface of various three-dimensional resin molded articles, wooden articles or metal articles, directly or after lamination on various flat resin sheets, whitening is suppressed and the design character is excellent. The difference of W values before and after tensile test is preferably 3 or less, and is more preferably 1 or less.

From the point of processing, the above-mentioned acrylic resin composition has fracture elongations in MD direction and TD direction by a tensile test of the specimen with a thickness of 50 $\mu$m and a width of 15 mm being 100 % or more. The tensile test was carried out under an initial inter-chuck distance of 50 mm, a tensile rate of 50 mm/min. and a temperature of 23°C. The fracture elongation is more preferably 120 % or more, and is further preferably 140 % or more. If the fracture elongation is 100 % or more, fracture and crack are suppressed when it is laminated on various three-dimensional resin molded bodies or the like.

The acrylic resin composition may contain a compounding agent. Examples of the compounding agent include stabilizers, lubricants, processing aids, plasticizers, impact resistance auxiliary agents, fillers, antimicrobial agents, fungicides, blowing agents, mold release agents, antistatic agents, coloring agents, matting agents, ultraviolet absorbers and thermoplastic polymers. This compounding agent can be added to a latex of a polymerization liquid obtained by emulsion polymerization to transform the mixture of the compounding agent and the polymer into a powder, and this compounding agent may also be added after transforming the latex into a powder. Further, this compounding agent may be supplied to a kneader attached to a molding machine for producing a molded body with a powder of the latex, and may be kneaded and mixed to obtain an acrylic resin composition, and a molded body may be formed. As a kneader attached to a molding machine, a single screw extruder, a twin screw extruder, or the like can be used.

The acrylic resin molded body of the present invention may be any one of a film, a sheet, a three-dimensional structure body, and the like as long as it can be obtained from the above-mentioned acrylic resin composition. A film is particularly preferable. Examples thereof include plastic greenhouses for agriculture, marking films, posters, wall papers, expanded sheets, PVC leathers for exterior, external wall building materials such as PVC steel roof materials and siding materials, vehicle interiors and exteriors, paint alternatives for furniture or the like, elevator interiors, rainwater gutterings, flooring materials, corrugated plates, makeup poles, lightings and coating materials for a plumbing material such as a bathroom or a kitchen. Other examples include heat insulating films, polarizing membrane protecting films used a polarizing plate of a liquid crystal display or the like and phase difference films used for a phase difference plate for view angle compensation and phase difference compensation, Here, films generally include a sheet with a thickness thicker than a film.

Examples of the method for molding an acrylic resin composition include extrusion molding, injection molding, vacuum molding, blow molding, die molding and compression molding. The melting temperature is preferably 200 to 280°C.

Examples of the method for molding an acrylic resin composition into a film include melting extrusion methods such as solution casting method, T-die method and inflation method. Among them, from the point of economy, T-die method is most preferable. As for the film thickness, for example, 10 to 500 $\mu$m is preferable, 15 to 200 $\mu$m is more preferable, and 40 to 200 $\mu$m is further more preferable. When the film thickness is 10 to 500 $\mu$m, it has an appropriate rigidity and also has a good laminate character, secondary workability and the like.

The acrylic resin film may directly be used for various uses, and may appropriately be laminated on a substrate before use. If a transparent acrylic resin film is laminated on a substrate, it can be used as an alternative of a clear coating, and the color of the substrate can be utilized. In such a use in which the color of the substrate is utilized, the acrylic resin film is superior to a polyvinyl chloride film and a polyester film at the points of transparency, depth and quality. Examples of the substrate on which the acrylic resin film is laminated include molded bodies from various resins and metals, and wooden articles. In the case in which the substrate is a resin, it is preferably a thermoplastic resin which can adhere in a melt condition to the acrylic resin film. Examples thereof include acrylonitrile-butadiene-styrene (ABS) resins, acrylonitrile-styrene (AS) resins, polystyrene resins, polycarbonate resins, vinyl chloride resins, acrylic resins and polyester resins, or resins containing this resin as a main component. Among these, from the point of adhesiveness, ABS resins, AS resins, polycarbonate resins and vinyl chloride resins, or resins containing this resin as a main component are preferable. In the case of the substrate from a resin such as a polyolefin which is difficult to adhere in a melt condition, the acrylic resin may be laminated after appropriately providing an adhesive layer.

In the case in which the substrate has a two-dimensional shape and the substrate is a material which can adhere in a melt condition, the acrylic resin film is laminated on the substrate by a method such as heat lamination. In the case of in which the substrate is a material which is difficult to adhere in a melt condition, the acrylic resin film may be laminated using an adhesive agent or after giving one surface of the acrylic resin film adhesiveness. In the case in which the substrate has a three-dimensional shape, the acrylic resin film is laminated on the substrate by a molding method such as insert molding in which the acrylic resin film preliminarily processed into a predetermined shape is inserted to a mold for injection molding and in-mold molding in which the acrylic resin film is vacuum molded inside a mold before injection molding. Among these, the in-mold molding is preferable because the acrylic resin film is vacuum molded into a three-dimensional shape and a resin which is a raw material of the substrate is thereafter injected inside the molded body by injection molding to integrate them, and because the laminated body having the acrylic resin film on the surface can easily be obtained. Also, it is also preferable from the points that molding of the acrylic resin film and injection molding can be carried out in one step and that workability and economy are excellent. The heat temperature in the in-mold molding is preferably a temperature at which the acrylic resin film is softened or higher, for example, 70 to 170°C. If it is 70°C or higher, good molding is carried out. If it is 170°C or lower, the molded body obtained has an excellent surface appearance and mold release character.

In the case in which the acrylic resin film is laminated on a substrate for at least one purpose of the substrate protection, an ultraviolet absorber is preferably added to the acrylic resin film for giving a weathering resistance. The molecular weight of the ultraviolet absorber is preferably 300 or more, and more preferably 400 or more. If the ultraviolet absorber having a molecular weight of 300 or more is used, it is suppressed, for example, that the film adheres to a transfer roller or the like at the time of producing the film to occur a trouble such as roller contamination. As the kind of the ultraviolet absorber, benzotriazole type absorbers and triazine type absorbers with a molecular weight of 400 or more are preferable. Examples of the former include TINUVIN 234 of BASF Japan Ltd. and ADEK STAB LA-31RG of ADEKA CORPORATION, and examples of the latter include TINUVIN 1577 of BASF Japan Ltd.

A surface treatment such as coating for giving various functions can be carried out for the surface of the acrylic resin film, if desired. Examples of the surface treatment include printing treatments such as silk printing and ink jet printing, metal depositions, sputterings and wet plating treatments for metal appearance grant or antireflection, surface hardening treatments for surface hardness improvement, water repellent treatments or photocatalyst layer formation treatments for the prevention of contamination, antistatic treatments for the prevention of dust grant or for the purpose of electromagnetic wave cutting, antireflective layer formations, antidazzle treatments and matting treatments. As the printing treatment, a one side printing treatment in which one side of the acrylic resin film is printed is preferable, In the case in which the acrylic resin film is laminated on a surface of the substrate, back-surface printing in which the printing surface is the adhesive layer to the substrate is preferable from the points of the printing surface protection and the quality grant.

EXAMPLE

As follows, the present invention is concretely explained, but the present invention is not limited to this. Note that, "part(s)" represents "part(s) by mass", and "%" represents "mass %". Abbreviations represent the following.

| MMA | methyl methacrylate |
|---|---|
| MA | methyl acrylate |
| N-BA | n-butyl acrylate |
| 1, 3-BD | 1,3-butyleneglycol dimethacrylate |
| AMA | allyl methacrylate |
| CHP | cumene hydroperoxide |
| RS-610NA | sodium mono-n-dodecyloxytetraoxyethylene phosphate (PHOSPHANOL RS-610NA, made by TOHO chemical industry Co., Ltd.) |
| n-OM | n-octyl mercaptan |
| t-BH | t-butyl hydroperoxide |
| EDTA | disodium ethylenediamine tetraacetate |

<Example 1>

After 8.5 parts of deionized water was supplied to a container having a stirrer, a monomer component consisting of 0.3 part of MMA, 4.5 parts of n-BA, 0.2 part of 1, 3-BD, 0.05 part of AMA and 0.025 part of CHP was loaded, and was stirred and mixed at room temperature. Then, 1.1 parts of RS-610NA was loaded to the above-mentioned container with stirring, and the stirring was continued for 20 minutes to prepare an emulsion liquid.

Then, 186.5 parts of deionized water was supplied to a polymerization container having a condenser, and the temperature was raised to 70°C. Further, a mixture, which was prepared by mixing 0.20 part of sodium formaldehyde sulphoxylate, 0.0001 part of ferrous sulfate and 0.0003 part of EDTA with 5 parts of deionized water, was loaded to this polymerization container at one time. Then, with stirring under nitrogen, the emulsion liquid prepared was dropped to the polymerization container over 8 minutes, and the reaction was thereafter continued for 15 minutes to finish a polymerization of first elastomeric polymer (A1). Then, a monomer component consisting of 1.8 parts of MMA, 27.0 parts of n-BA, 1.2 parts of 1, 3-BD and 0.30 part of AMA was dropped with 0.019 part of CHP to the polymerization container over 90 minutes, and the reaction was thereafter continued for 60 minutes to finish a polymerization of second elastomeric polymer (A2). Subsequently, a monomer component consisting of 6 parts of MMA, 4 parts of n-BA and 0.075 part of AMA was dropped with 0.0125 part of CHP to the polymerization container over 45 minutes, and the reaction was thereafter continued for 60 minutes to form intermediate polymer (C). The Tg of only first elastomeric polymer (A1) was -48°C, the Tg of only second elastomeric polymer (A2) was -48°C, and the Tg of only intermediate polymer (C) was 20°C.

Subsequently, a monomer component (component (B)) consisting of 50.6 parts of MMA, 4.4 parts of n-BA, 0.40 part of n-OM and 0.07 part of t-BH was dropped to the polymerization container over 140 minutes, and the reaction was thereafter continued for 60 minutes to obtain a latex acrylic resin composition. The Tg of the polymer of component (B) was 84°C. Also, the average particle diameter of the latex acrylic resin composition which was measured after the polymerization was 0.12 $\mu$m.

The latex acrylic resin composition obtained was filtered using a vibration filtration apparatus to which a mesh (average aperture: 62 $\mu$m) made of SUS as a filtering medium was attached and was thereafter salted out in an aqueous solution containing 3 parts of calcium acetate. It was washed with water and was collected, and it was thereafter dried to obtain a powder acrylic resin composition. The gel content and the weight average molecular weight of this powder acrylic resin composition were measured by the following methods. The results are shown in Table 2.

Next, 100 parts of the powder acrylic resin composition was mixed with 1.9 parts of ADEK STAB LA-31 RG (made by ADEKA CORPORATION), 0.3 part of ADEK STAB LA-57 (made by ADEKA CORPORATION), 0.1 part of Irganox 1076 (made by BASF Japan Ltd.) and 2 parts of METABLEN P551A (made by Mitsubishi Rayon Co., Ltd.) as a compounding agent using a Henschel mixer. This powder mixture was melt-kneaded under a cylinder temperature of 200 to 240°C and a die temperature of 240°C using a degassing extruder (TEM-35, made by TOSHIBA MACHINE CO., LTD.) to obtain a pellet. The melt flow rate of the pellet obtained was measured by the following method. The result is shown in Table 2.

The above-mentioned pellet was dried at 80°C for a day and night. Films with a thickness of 50 $\mu$m and 75 $\mu$m were formed under a cylinder temperature of 200 to 240°C, a T-die temperature of 250°C and a cooling roll temperature of 80°C using a non-vent screw extruder (L / D =26) with an opening diameter of 40 mm to which a T-die with a width of 300 mm was attached. The pressure of the resin in the extruder, the difference of W values before and after tensile test of the film with a thickness of 75 $\mu$m and the tensile property of the film with a thickness of 50 $\mu$m were measured by the following methods. The results are shown in Table 2.

<Gel content>

It was calculated by the above-mentioned method.

<Weight average molecular weight>

It was calculated by the above-mentioned method.

<Flowability>

A pellet was heated to 230°C, and after a lapse of 4 minutes, an MFI was measured under a load of 49 N using a melt indexer (L243) (made by TechnoSeven Co., Ltd.).

<Whitening resistance under tensile load>

A film with a thickness of 75 $\mu$m was cut into 20 mm in width to produce a specimen. A tensile test was carried out in a longitudinal direction (Machine Direction: MD direction) using Strograph T (made by Toyo Seiki Seisaku-sho, LTD.) under an initial inter-chuck distance of 25 mm, a tensile rate of 500 mm/min., a temperature of 23°C and an end-point inter-chuck distance of 45 mm. Before and after tensile test, W values were measured by a color-difference meter (SE-2000) (made by NIPPON DENSHOKU INDUSTRIES CO., LTD.) using a C/2° light source according to geometric condition a of JIS Z 8722 (Methods of color measurement - Reflecting and transmitting objects), to calculate a difference thereof.

<Tensile property>

A film with a thickness of 50 $\mu$m was cut into 15 mm in width to produce a specimen. The specimen was stretched until fracture in an MD direction or in a transverse direction (Traverse Direction: TD direction) using Strograph T (made by Toyo Seiki Seisaku-sho, LTD.) under an initial inter-chuck distance of 50 mm, a tensile rate of 50 mm/min. and a temperature of 23°C, to measure a fracture elongation.

<Average particle diameter>

An average particle diameter of a latex acrylic resin composition was measured by dynamic light scattering using a light scattering photometer (DLS-700) (made by OTSUKA ELECTRONICS CO., LTD.).

<Glass transition temperature>

A glass transition temperature (Tg) of first elastomeric polymer (A1), second elastomeric polymer (A2) or the like was calculated by the FOX equation using values of homopolymers which are described in a polymer handbook (Polymer HandBook (J. Brandrup, Interscience, 1989)).

<Example 2>

Films were produced and properties thereof were measured in the same manner as in Example 1 except that the component of second elastomeric polymer (A2) was set to be 2.1 parts of MMA, 31.5 parts of n-BA, 1.4 parts of 1,3-BD, 0.35 part of AMA and 0.0022 part of CHP, and that component (B) was set to be 46.0 parts of MMA, 4.0 parts of n-BA, 0.40 part of n-OM and 0.06 part of t-BH. The results are shown in Table 2.
The Tgs calculated from only first elastomeric polymer (A1), only second elastomeric polymer (A2), only intermediate polymer (C) and only component (B) were respectively the same as those of Example 1. The average particle diameter of the latex acrylic resin composition was 0.12 $\mu$m.

<Example 3>

Films were produced and properties thereof were measured in the same manner as in Example 1 except that the component of second elastomeric polymer (A2) was set to be 1.5 parts of MMA, 22.5 parts of n-BA, 1.0 part of 1,3-BD, 0.25 part of AMA and 0.016 part of CHP, and that component (B) was set to be 55.2 parts of MMA, 4.8 parts of n-BA, 0.30 part of n-OM and 0.08 part of t-BH. The results are shown in Table 2.
The Tgs calculated from only first elastomeric polymer (A1), only second elastomeric polymer (A2), only intermediate polymer (C) and only component (B) were respectively the same as those of Example 1. The average particle diameter of the latex acrylic resin composition was 0.12 $\mu$m.

<Example 4>

Films were produced and properties thereof were measured in the same manner as in Example 1 except that the component of rigid polymer (B) was set to be 50.6 parts of MMA, 4.4 parts of n-BA, 0.30 part of n-OM and 0.07 part of t-BH. The results are shown in Table 2,

<Comparative Example 1>

Films were produced and properties thereof were measured in the same manner as in Example 1 except that the component of second elastomeric polymer (A2) was set to be 1.5 parts of MMA, 22.5 parts of n-BA, 1.0 part of 1,3-BD, 0.25 part of AMA and 0.016 part of CHP, and that component (B) was set to be 55.2 parts of MMA, 4.8 parts of n-BA, 0.20 part of n-OM and 0.08 part of t-BH. The results are shown in Table 2.
The Tgs calculated from only first elastomeric polymer (A1), only second elastomeric polymer (A2), only intermediate polymer (C) and only component (B) were respectively the same as those of Example 1. The average particle diameter of the latex acrylic resin composition was 0.12 $\mu$m.

<Comparative Example 2>

Films were produced and properties thereof were measured in the same manner as in Example 1 except that the component of second elastomeric polymer (A2) was set to be 1.5 parts of MMA, 22.5 parts of n-BA, 1.0 part of 1,3-BD, 0.25 part of AMA and 0.016 part of CHP, and that the component of intermediate polymer (C) was set to be 6.0 parts of MMA, 4.0 parts of n-BA, 0.025 part of AMA and 0.0125 part of CHP, and that component (B) was set to be 55.2 parts of MMA, 4.8 parts of n-BA, 0.30 part of n-OM and 0.08 part of t-BH. The results are shown in Table 2.

The Tgs calculated from only first elastomeric polymer (A1), only second elastomeric polymer (A2), only intermediate polymer (C) and only rigid polymer (B) were respectively the same as those of Example 1. The average particle diameter of the latex acrylic resin composition was 0.12 $\mu$m.

<Comparative example 3>

Films were produced and properties thereof were measured in the same manner as in Example 1 except that the component of second elastomeric polymer (A2) was set to be 2.1 parts of MMA, 31.5 parts of n-BA, 1.4 parts of 1,3-BD, 0.35 part of AMA and 0.022 part of CHP, and that component (B) was set to be 46.0 parts of MMA, 4.0 parts of n-BA, 0.30 part of n-OM and 0.06 part of t-BH. The results are shown in Table 2.

The Tgs calculated from only first elastomeric polymer (A1), only second elastomeric polymer (A2), only intermediate polymer (C) and only component (B) were respectively the same as those of Example 1. The average particle diameter of the latex acrylic resin composition was 0.12 $\mu$m.

<Comparative example 4>

Films were produced and properties thereof were measured in the same manner as in Example 1 except that the component of intermediate polymer (C) was set to be 6.0 parts of MMA, 4.0 parts of n-BA, 0.025 part of AMA and 0.0125 part of CHP, and that component (B) was set to be 50.6 parts of MMA, 4.4 parts of n-BA, 0.80 part of n-OM and 0.07 part of t-BH. The results are shown in Table 2.

The Tgs calculated from only first elastomeric polymer (A1), only second elastomeric polymer (A2), only intermediate polymer (C) and only rigid polymer (B) were respectively the same as those of Example 1. The average particle diameter of the latex acrylic resin composition was 0.12 $\mu$m.

<Comparative example 5>

A powder acrylic resin composition was obtained in the same manner as in Example 1 except that the component of second elastomeric polymer (A2) was set to be 1.5 parts of MMA, 22.5 parts of n-BA, 1.0 part of 1,3-BD, 0.25 part of AMA and 0.016 part of CHP, and that component (B) was set to be 55.2 parts of MMA, 4.8 parts of n-BA, 0.20 part of n-OM and 0.08 part of t-BH.

Next, 67 parts of the powder acrylic resin composition obtained, 33 parts of ACRYPET MF001 (made by Mitsubishi Rayon Co., Ltd.) as a linear polymer, as well as 1.9 parts of ADEK STAB LA-31 RG (made by ADEKA CORPORATION), 0.3 part of ADEK STAB LA-57 (made by ADEKA CORPORATION), 0.1 part of Irganox 1076 (made by BASF Japan Ltd.) and 2 parts of METABLEN P551A (made by Mitsubishi Rayon Co., Ltd.) as a compounding agent were added and thereafter mixed using a Henschel mixer. This powder mixture was melt-kneaded under a cylinder temperature of 200 to 240°C and a die temperature of 240°C using a degassing extruder (TEM-35, made by TOSHIBA MACHINE CO., LTD.) to obtain a pellet. After that, films were produced and properties thereof were measured in the same manner as in Example 1. The results are shown in Table 2.

[Table 1]

[Table 1]

Composition of Latex Acrylic Resin Composition part(s)

| | First Elastomeric Polymer (A1) MMA/n-BA/1,3-BD /AMA/CHP/RS-610NA | Second Elastomeric Polymer (A2) MMA/n-BA/1,3-BD /AMA/CHP | Intermediate Polymer (C) MMA/n-BA/AMA/CHP | Rigid Polymer (B) MMA/n-BA/n-OM/t-BH |
|---|---|---|---|---|
| Ex. 1 | 0.3/4.5/0.2/0.05/0.025/1.1 | 1.8/27.0/1.2/0.30/0.019 | 6/4/0.075/0.0125 | 50.6/4.4/0.40/0.07 |
| Ex. 2 | ← | 2.1/31.5/1.4/0.35/0.022 | ← | 46.0/4.0/0.40/0.06 |
| Ex. 3 | ← | 1.5/22.5/1.01/0.25/0.016 | ← | 55.2/4.8/0.30/0.08 |
| Ex. 4 | ← | 1.8/27.0/1.2/0.30/0.019 | ← | 50.6/4.4/0.30/0.07 |
| Comp. Ex. 1 | ← | ← | ← | 55.2/4.8/0.20/0.08 |
| Comp. Ex. 2 | ← | ← | 6/4/0.025/0.0125 | 55.2/4.8/0.30/0.08 |
| Comp. Ex. 3 | ← | 2.1/31.5/1.4/0.35/0.022 | 6/4/0.075/0.0125 | 46.0/4.0/0.30/0.06 |
| Comp. Ex. 4 | ← | 1.8/27.0/1.2/0.30/0.019 | 6/4/0.025/0.0125 | 50.6/4.4/0.80/0.07 |
| Comp. Ex. 5 | ← | 1.55/22.5/1.0/0.25/0.016 | ← | 55.2/4.8/0.20/0.08 |

[Table 2]

[Table 2]

| | Flowability MFI g/10min | Difference of W Values Before and After Tensile Test of Specimen | Gel Content wt% | Weight Average Molecular Weight Mw | Pressure of Resin MPa | Fracture Elongation % MD/TD |
|---|---|---|---|---|---|---|
| Ex. 1 | 9.9 | 1.1 | 55 | 3.7E+04 | 10.9 | 147/156 |
| Ex. 2 | 7.6 | 0.3 | 61 | 3.4E+04 | 11.6 | 138/130 |
| Ex. 3 | 5.8 | 3.4 | 55 | 4.9E+04 | 11.8 | 150/154 |
| Ex. 4 | 5.1 | 0.9 | 59 | 4.3E+04 | 14.2 | 172/185 |
| Comp. Ex. 1 | 1.9 | 0.0 | 60 | 5.7E+04 | 20.9 | 136/170 |
| Comp. Ex. 2 | 7.8 | 13.9 | 49 | 4.9E+04 | 9.4 | 164/166 |
| Comp. Ex. 3 | 3.3 | 0.2 | 64 | 4.4E+04 | 15.3 | 163/195 |
| Comp. Ex. 4 | 57.2 | Unmeasurable Due to Fracture | 47 | 2.3E+04 | - | 5/7 |
| Comp. Ex. 5 | 5.9 | 13.9 | 36 | 8.3E+04 | 14.0 | 44/52 |

As is obvious from the results, it is found that since the acrylic resin composition of the present invention has a high flowability and low melt viscosity, and the pressure at the time of melt extrusion is low, and melt extrusion for film molding or the like can be carried out over a long period of time. Also, if it is formed in a film state, the film obtained has a small difference of W values before and after tensile test and an excellent whitening resistance under tensile load. Thus, when the film is laminated directly on a surface of various three-dimensional resin molded articles, wooden articles or metal articles, or when the film after lamination on various resin sheets is laminated on a surface of various three-dimensional resin molded articles, wooden articles or metal articles, the workability is excellent and fracture and crack are suppressed. The molded body obtained has an excellent transparency and design character, and also has a high mechanical strength.

On the other hand, since the acrylic resin composition having a large weight average molecular weight (Comparative Example 1) has a low flowability and high melt viscosity, the pressure at the time of melt extrusion is high, and it comes to be difficult to carry out melt extrusion over a long period of time. The film of the acrylic resin composition of Comparative Example 2 has an excellent flowability, but it is obvious that the film obtained is significantly whitened after tensile load and has a poor design character. In the film of the acrylic resin composition of Comparative Example 3, whitening after tensile load is suppressed, but it has a poor flowability and moldability. The film of the acrylic resin composition of Comparative Example 4 has an excellent flowability, but the film obtained has a low mechanical strength and the handling is difficult, and fracture and crack frequently occur when it is laminated on a surface of various three-dimensional resin molded articles, wooden articles or metal articles, directly or after lamination on a resin sheet. The film of the acrylic resin composition of Comparative Example 5 has an excellent flowability, but it is obvious that the film obtained is significantly whitened after tensile load and has a poor design character. Also, the film has a low mechanical strength and the handling is difficult, and fracture and crack frequently occur when it is laminated on a surface of various three-dimensional resin molded articles, wooden articles or metal articles, directly or after lamination on a resin sheet.

INDUSTRIAL APPLICABILITY

Since the acrylic resin composition of the present invention has a high flowability and low melt viscosity, the pressure at the time of melt extrusion is low, and melt extrusion for film molding or the like can be carried out over a long period of time. Fracture and crack at the time of processing are suppressed and the molded body having an excellent design character is obtained, which is suitable for a surface membrane of various resin molded articles or the like.

**Claims**

1. An acrylic resin composition obtained by polymerizing a monomer comprising an alkyl methacrylate having an alkyl group with a carbon number of 1 to 4 in a presence of an elastomeric polymer, in which the elastomeric polymer is obtained by polymerizing any one kind or two or more kinds selected from alkyl acrylates having an alkyl group with a carbon number of 1 to 8 and alkyl methacrylates having an alkyl group with a carbon number of 1 to 4 with a graft crossing agent; wherein the composition satisfies the following requirements (1) and (2).

   (1) A melt flow index is 5 g /10 min. or more, which is measured under conditions of a temperature of 230°C and a load of 5 kg according to ASTM D-1238,
   (2) A difference of W values before and after tensile test of a specimen is 4 or less, which is measured using a C/2° light source according to geometric condition a of JIS Z 8722 (Methods of color measurement - Reflecting and transmitting objects). The specimen is a film with a thickness of 75 $\mu$m and a width of 20 mm, which is obtained by molding the acrylic resin composition. The tensile test is carried out under conditions of an initial inter-chuck distance of 25 mm, a temperature of 23°C, a tensile rate of 500 mm/min. and an end-point inter-chuck distance of 45 mm.

2. The acrylic resin composition according to claim 1, wherein the composition satisfies the following requirements (3) and (4).

   (3) A weight average molecular weight of an acetone soluble portion in the acrylic resin composition is 30000 or more and 50000 or less, which is measured by gel permeation chromatography (GPC).
   (4) A value of a gel content is 53 % or more and 63 % or less, which is calculated by the following equation:

$$G = (m / M) \times 100$$

   wherein, in the equation, G (%) represents a gel content and M represents a mass of a predetermined amount of the acrylic resin composition, and m is a mass of the acetone soluble portion in the predetermined amount of the acrylic resin composition.

3. An acrylic resin molded body obtained by using the acrylic resin composition according to claim 2.

4. The acrylic resin molded body according to claim 2, wherein the molded body is a film.


**Patentansprüche**

1. Acrylharzzusammensetzung, erhalten durch Polymerisieren eines Monomeren, umfassend ein Alkylmethacrylat, das eine Alkylgruppe mit einer Kohlenstoffzahl von 1 bis 4 aufweist, in Gegenwart eines elastomeren Polymeren, wobei das elastomere Polymere erhalten wird durch Polymerisieren irgendeiner Art oder zwei oder mehrerer Arten, gewählt aus Alkylacrylaten mit einer Alkylgruppe mit einer Kohlenstoffzahl von 1 bis 8 und Alkylmethacrylaten mit einer Alkylgruppe mit einer Kohlenstoffzahl von 1 bis 4, mit einem Pfropf-Vernetzungsmittel; wobei die Zusammensetzung die folgenden Erfordernisse (1) und (2) erfüllt:

   (1) Schmelzflussindex ist 5 g / 10 min. oder mehr, welcher gemessen wird unter Bedingungen einer Temperatur von 230°C und einer Last von 5 kg gemäß ASTM D-1238;
   (2) Differenz von W-Werten vor und nach Zugversuch eines Prüfkörpers ist 4 oder weniger, gemessen unter Verwendung einer C/2°-Lichtquelle gemäß geometrischer Bedingung a von JIS Z 8722 (Methods of color measurement - Reflecting and transmitting objects); wobei der Prüfkörper eine Folie mit einer Dicke von 75$\mu$m und einer Breite von 20 mm ist, welche erhalten wird durch Formpressen der Acrylharzzusammensetzung; der Zugversuch ausgeführt wird unter Bedingungen eines anfänglichen Spannfutter-Zwischenabstandes von 25 mm, einer Temperatur von 23°C, einer Zuggeschwindigkeit von 500 mm/min und einem Endpunkt-Spannfutter-Zwischenabstand von 45 mm.

2. Acrylharzzusammensetzung nach Anspruch 1, wobei die Zusammensetzung die folgenden Erfordernisse (3) und (4) erfüllt:

(3) Ein gewichtsmittleres Molekulargewicht eines in Aceton löslichen Anteils in der Acrylharzzusammensetzung beträgt 30000 oder mehr und 50000 oder weniger, gemessen durch Gelpermeationschromatographie (GPC);
(4) Ein Wert eines Gelgehaltes beträgt 53 % oder mehr und 63 % oder weniger, berechnet durch die folgende Gleichung:

$$G = (m / M) \times 100$$

worin in der Gleichung G (%) einen Gelgehalt bedeutet, M eine Masse einer vorbestimmten Menge der Acrylharzzusammensetzung bedeutet, und m eine Masse des in Aceton löslichen Teils in der vorbestimmten Menge der Acrylharzzusammensetzung bedeutet.

3. Acrylharz-Formkörper, erhalten durch Verwendung der Acrylharzzusammensetzung gemäß Anspruch 2.

4. Acrylharz-Formkörper nach Anspruch 2, wobei der Formkörper eine Folie ist.


**Revendications**

1. Composition de résine acrylique obtenue par polymérisation d'un monomère comprenant un méthacrylate d'alkyle ayant un groupe alkyle avec un nombre d'atomes de carbone de 1 à 4 en présence d'un polymère élastomère, dans laquelle le polymère élastomère est obtenu par polymérisation d'un type ou de deux types ou plus choisis parmi les acrylates d'alkyle ayant un groupe alkyle avec un nombre d'atomes de carbone de 1 à 8 et les méthacrylates d'alkyle ayant un groupe alkyle avec un nombre d'atomes de carbone de 1 à 4 avec un agent de réticulation greffé ; dans laquelle la composition satisfait aux exigences (1) et (2) suivantes

(1) l'indice de fluidité est de 5 g/10 minutes ou plus, qui est mesuré dans des conditions de température de 230 °C et une charge de 5 kg selon la norme ASTM D-1238,
(2) une différence de valeurs W avant et après le test de traction d'un échantillon est de 4 ou moins, qui est mesurée en utilisant une source de lumière C/2° selon les conditions géométriques de la norme JIS Z 8722 (Méthode de mesure de couleur - objets réfléchissants et transmetteurs),

l'échantillon est un film ayant une épaisseur de 75 μm et une largeur de 20 mm, qui est obtenu par moulage de la composition de résine acrylique ; le test de traction est réalisé dans des conditions d'une distance entre les mâchoires initiale de 25 mm, une température de 23 °C, une vitesse de traction de 500 mm/min et une distance entre les mâchoires finale de 45 mm.

2. Composition de résine acrylique selon la revendication 1, dans laquelle la composition satisfait les exigences (3) et (4) suivantes

(3) le poids moléculaire moyen en poids d'une partie soluble dans l'acétone de la composition de résine acrylique est de 30 000 ou plus et de 50 000 ou moins, qui est mesurée par chromatographie par perméation de gel (GPC) ;
(4) la valeur de la teneur en gel est de 53 % ou plus et de 63 % ou moins, qui est calculée par l'équation suivante :

$$G = (m / M) \times 100$$

dans laquelle, dans l'équation, G (%) représente une teneur en gel et M représente une masse d'une quantité prédéterminée de la composition de résine acrylique, et m est la masse de la partie soluble dans l'acétone de la quantité prédéterminée de la composition de résine acrylique.

3. Corps moulé de résine acrylique obtenu en utilisant la composition de résine acrylique selon la revendication 2.

4. Corps moulé de résine acrylique selon la revendication 2, dans lequel le corps moulé est un film.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62019309 A
- JP 63008983 B
- JP 2003128735 A
- JP 2006249198 A
- JP 9157477 A

**Non-patent literature cited in the description**

- **J. BRANDRUP.** Polymer HandBook. Interscience, 1989